# EUROPÄISCHE PATENTSCHRIFT

(11) **EP 1 705 048 B1**
(45) Veröffentlichungstag und Bekanntmachung des Hinweises auf die Patenterteilung: **09.03.2011**
(21) Anmeldenummer: 05026050.4
(22) Anmeldetag: 30.11.2005
(51) Int. Cl.: B60J 10/08, B60H 1/00

(54) **Dichtungsanordnung für ein Lüftungsgehäuse**
Sealing device for a ventilation duct
Dispositif de joint d'étanchéité pour un conduit de ventilation

(30) Priorität: 26.03.2005 DE 102005013973
(43) Veröffentlichungstag der Anmeldung: 27.09.2006
(73) Patentinhaber: Dr. Ing. h.c. F. Porsche AG, 70435 Stuttgart (DE)
(72) Erfinder: Metzger, Margret, 71735 Eberdingen-Hochdorf (DE); Luik, Klaus, 75417 Muehlacker (DE)

(56) Entgegenhaltungen:
- EP-A- 0 266 767
- DE-C1- 3 500 359
- JP-A- 8 058 348
- US-A- 4 783 115

## Beschreibung

Die Erfindung bezieht sich auf eine Dichtungsanordnung für ein Lüftungsgehäuse nach dem Oberbegriff des Anspruchs 1.

Es hat sich bei einer Luftübergabestelle von einem Lüftungsgehäuse in einer Fahrzeugtür zu einem anschließenden Luftkanal in einer Fahrzeugsäule herausgestellt, dass Luft über die herkömmliche Dichtung des Lüftungsgehäuses bei geschlossener Tür aufgrund eines sich bildenden relativ großen Spalts entweicht und es zu Zugerscheinungen im Fahrzeuginnenraum kommen kann.

Aufgabe der Erfindung ist es, diese Nachteile herkömmlicher Lüftungsgehäuse wie z.B.: JP08058348 mit umlaufender Dichtung zu vermeiden und eine verbesserte Dichtung zu schaffen, die Zugerscheinungen unterbindet.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, dass das Lüftungsgehäuse eine Dichtung zum Fahrzeuginnenraum hin gewährleistet, welche eine Luftdichtheit bewirkt. Dies wird nach der Erfindung erreicht, indem das Lüftungsgehäuse an seiner Luftübergabestelle zu einem Luftkanal in einer Fahrzeugsäule eine umlaufende Dichtung umfasst, die zur Türinnenseite hin eine zusätzliche Dichtungslippe aufweist, welche sich bei geschlossener Tür an der Fahrzeugsäule oder dem Luftkanal dichtend anlegt.

Diese zusätzliche Dichtungslippe ist vorstehend zur umlaufenden Dichtung des Lüftungskanals angeordnet, derart, dass sich ein Schenkel der zusätzlichen Dichtungslippe an einer Innenwandfläche des Luftkanals in der Fahrzeugsäule anlegt. Hierdurch wird in vorteilhafter Weise nach der Erfindung erreicht, dass an der dem Fahrzeuginnenraum zugerichteten Bereich der umlaufenden Dichtung eine zur eigentlichen umlaufenden Dichtung vorstehende zusätzliche Dichtungslippe vorgesehen ist, wodurch ein möglicher Luftspalt zwischen der umlaufenden Dichtung und der gegenüberstehenden Verkleidung bzw. dem Luftkanal in der Fahrzeugsäule vermieden wird und somit störende Zugluft verhindert und die Luftmenge am Ausströmer der B-Säule nicht vermindert wird.

Damit ein absolut dichter Abschluss zwischen dem Lüftungsgehäuse und der Verkleidung bzw. dem Luftkanal in der Fahrzeugsäule bei geschlossener Tür sichergestellt ist, erstreckt sich die zusätzliche Dichtungslippe zumindest über die gesamte Längsseite des Lüftungsgehäuses, die dem Fahrzeuginnenraum zugerichtet ist. Darüber hinaus können auch noch weitere Abschnitte der Ober- und Unterseite des Lüftungsgehäuses mit der zusätzlichen Dichtlippe versehen sein.

Nach der Erfindung ist die zusätzliche Dichtungslippe einstückig mit der umlaufenden Dichtung des Lüftungsgehäuses ausgeformt und weist einen Schenkel auf, der sich von einem Steg der umlaufenden Dichtung in einer Ebene weg erstreckt und zwischen dem Schenkel und einer Dichtungszunge der umlaufenden Dichtung wird eine Ausrundung gebildet, die einer ausgerundeten Ecke des Luftkanals bzw. der Verkleidung der Fahrzeugsäule gegenübersteht. Durch diese Ausbildung der zusätzlichen Dichtungslippe ist sichergestellt, dass der Schenkel die Verkleidung bzw. den Luftkanal eckseitig umhüllt und eine dichte Luftspaltabdichtung bewirkt.

Ein Ausführungsbeispiel der Erfindung ist in den Zeichnungen dargestellt und wird im Folgenden näher beschrieben.

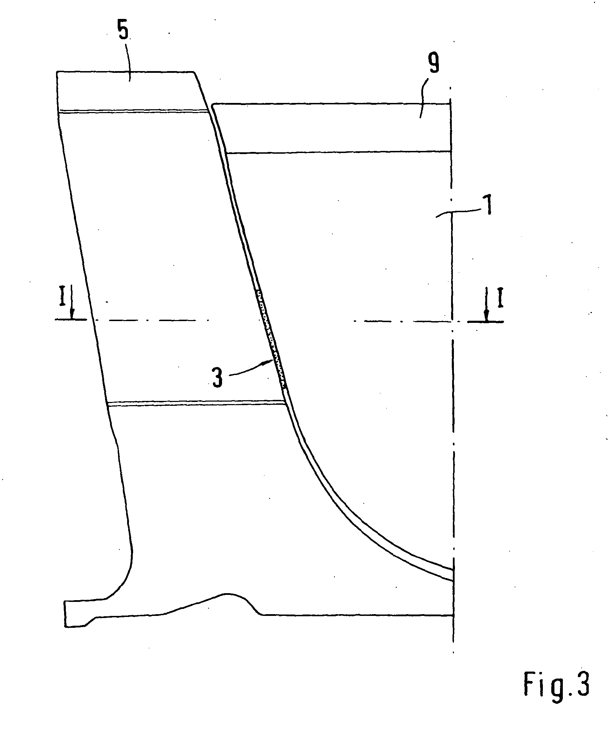

Es zeigen
- Fig. 1: einen Schnitt durch eine Fahrzeugtür und eine Fahrzeugsäule nach der Linie I-I der Fig. 3,
- Fig. 2: eine vergrößerte Darstellung Z einer umlaufenden Dichtung mit zusätzlicher Dichtungslippe am Lüftungsgehäuse, und
- Fig. 3: eine Seitenansicht auf eine Fahrzeugsäule und eine Fahrzeugtür mit angedeutetem Lüftungsgehäuse.

In einer Fahrzeugtür 9 ist ein Lüftungsgehäuse 1 eingesetzt, welches an seiner Mündungsöffnung 2, das heißt an der Luftübergabestelle L, mit einer umlaufenden Dichtung 3 versehen ist. Diese steht einem Luftkanal 4 in einer Fahrzeugsäule 5 gegenüber, an dem sich die umlaufende Dichtung 3 an einer Verkleidung bzw, an einer Stirnseite bzw. Innenseitenfläche F des Luftkanals 4 der Fahrzeugsäule 5 anlegt.

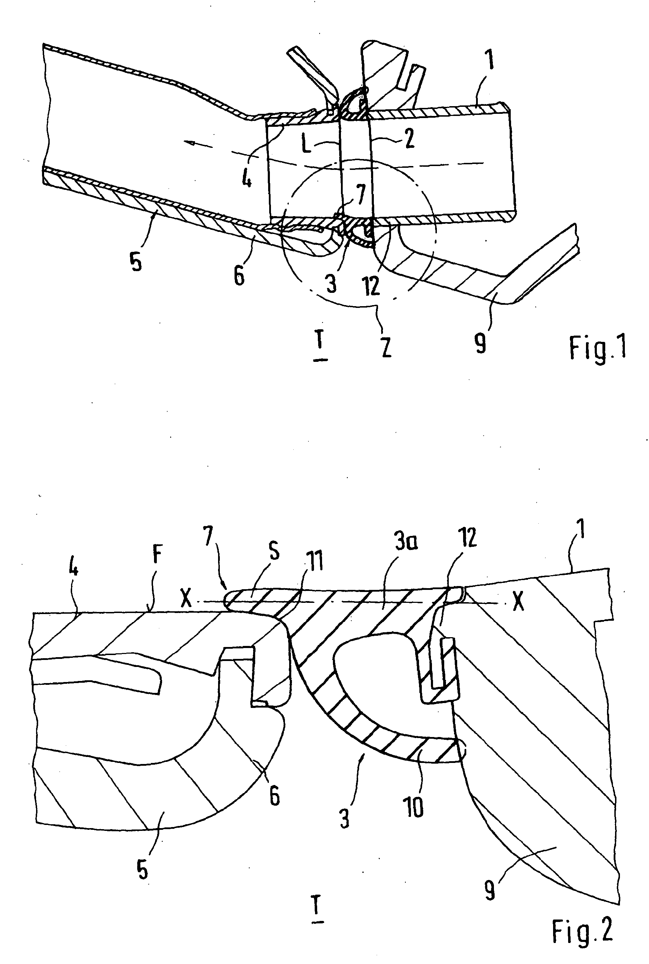

Die umlaufende Dichtung 3 ist bereichsweise mit einer zusätzlichen Dichtungslippe 7 versehen, welche vorstehend zur Dichtung 3 angeordnet ist. Wie in Fig. 2 näher dargestellt, erstreckt sich die Dichtungslippe 7 vorzugsweise entlang einer dem Fahrzeuginnenraum zugerichteten Längskante 12 des Lüftungsgehäuses 1. Ein Einlauf dieser zusätzlichen Dichtungslippe 7 in eine an der Ober- und Unterkante des Gehäuses 1 vorgesehenen Dichtung ist ebenfalls nach der Erfindung möglich.

Die zusätzliche Dichtungslippe 7 legt sich bei geschlossener Tür 9 an die Innenfläche F des Luftkanals 4 bzw. an die Verkleidung 6 der Fahrzeugsäule 5 an. Diese zusätzliche Dichtungslippe 7 ist vorzugsweise einstückig mit der umlaufenden Dichtung 3 des Lüftungsgehäuses 1 ausgeführt und umfasst einen Schenkel S, der sich von einem Steg 3a der umlaufenden Dichtung 3 in einer Ebene X-X wegerstreckt. Zwischen dem Schenkel S und einer Dichtungszunge 10 der umlaufenden Dichtung 3 ist innenseitig eine Ausrundung 11 vorgesehen, die einer ausgerundeten Ecke des Luftkanals 4 oder der Verkleidung 6 der Fahrzeugsäule 5 gegenübersteht.

## Patentansprüche

1. Dichtungsanordnung für ein Lüftungsgehäuse zwischen einer Fahrzeugtür und einer Fahrzeugsäule, wobei das Lüftungsgehäuse (1) an seiner Luftübergabestelle (L) zu einem Luftkanal (4) in der Fahrzeugsäule eine umlaufende Dichtung (3) umfasst welche an einer Stirnseite des Luftkanals (4) der Fahrzeugsäule anlegt, **dadurch gekennzeichnet, dass** die Dichtung zur Türinnenseite (T) hin eine zusätzliche Dichtungslippe (7) aufweist, welche sich bei geschlossener Tür (9) an die Fahrzeugsäule (5) oder den Luftkanal (4) anlegt.

2. Dichtungsanordnung nach Anspruch 1, **dadurch gekennzeichnet, dass** die zusätzliche Dichtungslippe (7) vorstehend zur umlaufenden Dichtung (3) angeordnet ist, derart, dass sich ein Schenkel (S) der zusätzlichen Dichtungslippe (7) an einer Innenwandfläche (F) des Luftkanals (4) in der Fahrzeugsäule (5) anlegt.

3. Dichtungsanordnung nach den Ansprüchen 1 oder 2, **dadurch gekennzeichnet, dass** sich die zusätzliche Dichtungslippe (7) zumindest über die gesamte Längsseite des Lüftungsgehäuses (1) erstreckt, die dem Fahrzeuginnenraum (T) zugerichtet ist.

4. Dichtungsanordnung nach einem der vorhergehenden Ansprüche, **dadurch gekennzeichnet, dass** die zusätzliche Dichtungslippe (7) einstückig mit der umlaufenden Dichtung (3) ausgeformt ist, und den Schenkel (S) umfasst, der sich von einem Steg (3a) der umlaufenden Dichtung (3) in eine Ebene (X-X) wegerstreckt und zwischen dem Schenkel (S) und einer Dichtungszunge (10) der umlaufenden Dichtung (3) eine Ausrundung (11) besteht, die einer ausgerundeten Ecke des Luftkanals (4) bzw. der Verkleidung (6) der Fahrzeugsäule (5) gegenübersteht.

## Claims

1. Seal arrangement for a ventilation housing between a vehicle door and a vehicle pillar, with the ventilation housing (1) comprising, at its air transfer point (L) to an air duct (4) in the vehicle pillar, an encircling seal (3) which bears against an end side of the air duct (4) of the vehicle pillar, **characterized in that** the seal has, towards the door inner side (T), an additional seal lip (7) which bears against the vehicle pillar (5) or the air duct (4) when the door (9) is closed.

2. Seal arrangement according to Claim 1, **characterized in that** the additional seal lip (7) is arranged so as to project relative to the encircling seal (3), in such a way that a limb (S) of the additional seal lip (7) bears against an inner wall surface (F) of the air duct (4) in the vehicle pillar (5) .

3. Seal arrangement according to Claim 1 or 2, **characterized in that** the additional seal lip (7) extends at least over the entirety of that longitudinal side of the ventilation housing (1) which is directed toward the vehicle interior space (T).

4. Seal arrangement according to one of the preceding claims, **characterized in that** the additional seal lip (7) is formed in one piece with the encircling seal (3) and comprises the limb (S) which extends away from a web (3a) of the encircling seal (3) in a plane (X-X), and a fillet (11) is formed between the limb (S) and a seal tongue (10) of the encircling seal (3), which fillet (11) faces a rounded corner of the air duct (4) or of the panelling (6) of the vehicle pillar (5).

## Revendications

1. Dispositif de joint d'étanchéité pour un boîtier de ventilation placé entre une porte de véhicule et un montant de véhicule, le boîtier de ventilation (1) comprenant, au niveau de son point de transfert d'air (L) conduisant à un canal d'air (4) prévu dans le montant de véhicule, un joint d'étanchéité (3) périphérique reposant contre une face frontale du canal d'air (4) du montant de véhicule, **caractérisé en ce que** le joint d'étanchéité comporte dans cette direction, avec le côté intérieur de la porte (T), une lèvre d'étanchéité (7) supplémentaire se positionnant contre le montant de véhicule (5) ou du canal d'air (4) lorsque la porte (9) est fermée.

2. Dispositif de joint d'étanchéité selon la revendication 1, **caractérisé en ce que** la lèvre de joint d'étanchéité (7) supplémentaire est disposée de façon saillante par rapport au joint d'étanchéité (3) périphérique, de telle sorte qu'un côté (S) de la lèvre de joint d'étanchéité (7) supplémentaire repose contre une surface de paroi intérieure (F) du canal d'air (4) dans le montant de véhicule (5).

3. Dispositif de joint d'étanchéité selon les revendications 1 ou 2, **caractérisé en ce que** la lèvre de joint d'étanchéité (7) supplémentaire s'étend au moins sur l'ensemble du côté longitudinal du boîtier de ventilation (1) orienté vers l'espace intérieur du véhicule (T).

4. Dispositif de joint d'étanchéité selon l'une quelconque des revendications précédentes, **caractérisé en ce que** la lèvre de joint d'étanchéité (7) supplémentaire est réalisée d'un seul tenant avec le joint d'étanchéité (3) périphérique et comprend le bord (S) s'étendant hors d'un étai (3a) du joint d'étanchéité (3) périphérique dans un plan (X-X) et présente un arrondi (11) entre le bord (S) et une languette d'étanchéité (10) du joint d'étanchéité (3) périphérique, ladite languette saillant hors d'un coin arrondi du canal d'air (4) et/ou du revêtement (6) du montant de véhicule (5).
